(19) Europäisches Patentamt
European Patent Office
Office européen des brevets

(11) EP 1 718 688 B1

(12) # FASCICULE DE BREVET EUROPEEN

(45) Date de publication et mention de la délivrance du brevet:
**06.05.2009 Bulletin 2009/19**

(21) Numéro de dépôt: **04805661.8**

(22) Date de dépôt: **08.12.2004**

(51) Int Cl.:
***C08F 293/00*** (2006.01) ***C09J 153/00*** (2006.01)

(86) Numéro de dépôt international:
**PCT/FR2004/003153**

(87) Numéro de publication internationale:
**WO 2005/066232 (21.07.2005 Gazette 2005/29)**

(54) **PROCEDE D'OBTENTION DE COPOLYMERES A BLOCS ET LEURS UTILISATIONS DANS LES COMPOSITIONS ADHESIVES**

VERFAHREN ZUR HERSTELLUNG VON BLOCKCOPOLYMEREN UND DEREN VERWENDUNG IN KLEBSTOFFZUSAMMENSETZUNGEN

METHOD OF OBTAINING BLOCK COPOLYMERS AND USES THEREOF IN ADHESIVE COMPOSITIONS

(84) Etats contractants désignés:
**AT BE BG CH CY CZ DE DK EE ES FI FR GB GR HU IE IS IT LI LT LU MC NL PL PT RO SE SI SK TR**

(30) Priorité: **11.12.2003 FR 0314505**

(43) Date de publication de la demande:
**08.11.2006 Bulletin 2006/45**

(73) Titulaire: **ARKEMA FRANCE**
**92700 Colombes (FR)**

(72) Inventeurs:
- **MAGNET, Stéphanie**
  **F-64370 Morlanne (FR)**
- **GUERRET, Olivier**
  **F-64230 Mazerolles (FR)**
- **PASSADE BOUPAT, Nicolas**
  **F-64000 Pau (FR)**
- **LAURICHESSE, Christian**
  **F-27300 Bernay (FR)**
- **EL BOUNIA, Nour Eddine**
  **F-64300 Orthez (FR)**

(74) Mandataire: **Lhoste, Catherine et al**
**ARKEMA FRANCE**
**Département Propriété Industrielle**
**420, rue d'Estienne d'Orves**
**92705 Colombes Cedex (FR)**

(56) Documents cités:
**WO-A-00/71501**
**WO-A-99/03894**
**WO-A-03/046032**
**WO-A-20/04087796**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte au domaine des formulations pour adhésifs, particulièrement au domaine des formulations pour adhésifs thermofusibles sensibles à la pression et plus particulièrement au domaine des formulations pour adhésifs à base de copolymères à blocs.

La présente invention décrit des copolymères à blocs, leur procédé de préparation par la polymérisation radicalaire contrôlée par les alcoxyamines ainsi que leur utilisation dans les formulations pour adhésifs.

Usuellement, les formulations d'adhésif thermofusible sensible à la pression généralement désignées par HMPSA, utilisées par exemple dans des applications bandes et étiquettes adhésives doivent présenter un compromis de propriétés entre leur mise en oeuvre (stabilité thermique, niveau de viscosité ...) et leurs propriétés physiques (adhésion, cohésion, tenue en température, etc...). Des rubans adhésifs utilisant des adhésifs HMPSA sont maintenant produits depuis plus de 50 ans.

Les formulations adhésives HMPSA sont usuellement composées de polymères, de résines tackifiantes et d'huile. C'est en adaptant la formulation totale (nature des ingrédients et pourcentages) que l'on remplit le cahier des charges d'une application donnée. Dans ces formulations, l'utilisation de la résine tackifiante et de l'huile permet à la fois d'adapter les propriétés mais aussi de diminuer le prix global de la formulation, le polymère étant le plus souvent le composé le plus coûteux.

Selon l'art antérieur, voir par exemple Ullmann's encyclopedia of industrial chemistry, 5eme edition (1995) Vol A 26, p 659-660, les HMPSA sont de préférence à base de copolymères blocs SIS (Styrène-isoprène-styrène) mais aussi SBS (styrène-butadiène-styrène).

Dans ces polymères de structure générale A-B-A, les blocs A sont généralement de nature thermoplastique avec une température de transition vitreuse (Tg) supérieure à 0°C et préférablement à 60°C et les blocs B sont de nature élastomère avec une Tg inférieure à 0°C, préférablement à -30°C.

L'un des paramètres clés pour réussir une formulation HMPSA est de maîtriser la compatibilité entre la résine tackifiante et/ou l'huile d'un coté et le copolymère bloc de l'autre côté, afin que ces additifs puissent se mélanger et modifier ainsi sélectivement chacun des blocs. De fait, l'essentiel des produits existants sur le marché ont été développés dans le but de pouvoir modifier soit les blocs styrène soit les blocs isoprène ou butadiène.

De manière générale, les formulations HMPSA contiennent entre 15% et 40% de polymère, le complément étant constitué de résine tackifiante et de plastifiant.

Comme cité dans le brevet US 5313041 concernant les HMPSA, les SBS et SIS présentent l'inconvénient d'être instables à chaud et aux rayons ultra-violets (UV).

De nouveaux copolymères blocs ABA ont donc été développés où le bloc B est composé par un acrylate d'alkyle. L'intérêt de ce type de momomère comme phase élastomère porte sur une meilleure stabilité thermique et résistance aux UV de par l'absence de double liaison et de meilleurs résultats d'adhésion de part la plus grande polarité.

De tels copolymères sont décrits par exemple dans le brevet EP 0 349 270 B1. La préparation desdits polymères se fait par la polymérisation radicalaire en présence d'Iniferter. Il est à noter que tous les exemples donnés dans ce document concernent des produits contenant au minimum 75% de phase B.

Etant donné que les paramètres de solubilité des monomères styrène et acrylate d'alkyle, en particulier acrylate de butyle, sont proches, les copolymères blocs A-B-A dont le bloc A est essentiellement à base de polystyrène et le bloc B à base de polyacrylate de butyle sont particulièrement difficiles à formuler. En effet, pour éviter d'avoir miscibilisation entre les blocs et de perdre ainsi les propriétés caractéristiques des HMPSA, il est particulièrement important de parfaitement contrôler le procédé de fabrication du copolymère de manière à avoir la meilleure séparation de phase possible. Il est aussi particulièrement important de bien choisir les additifs tels que les résines tackifiantes et les plastifiants entrant dans les formulations dans le but de modifier sélectivement le bloc A ou le bloc B. Une sélection hâtive des additifs peut conduire soit à une immiscibilité avec le bloc A et B soit au contraire à une miscibilité forte avec le bloc B et/ou le bloc A ce qui conduit à une perte de la séparation de phase et donc à un mauvais résultat final en terme de formulation adhésive.

Le document JP2001288442 de NITTO DENKO CORP décrit la synthèse de copolymères A-B-A dont le bloc A est constitué de styrène et le bloc B d'un acrylate avec une différence de coefficient de solubilité suffisamment élevée pour avoir une bonne séparation de phase lors de la synthèse. Le procédé de polymérisation radicalaire mis en oeuvre dans ce document est un procédé de type ATRP (Atom Transfert Radical Polymérisation). Cette technique implique l'utilisation de dérivés métalliques comme agents de contrôle, ce qui nécessite l'introduction, dans le procédé de fabrication dudit polymère, d'une étape supplémentaire de purification en fin de polymérisation afin d'éliminer les traces de métal présentes dans le milieu réactionnel. Notons également que ce document ne s'attache pas à la formulation du polymère pour obtenir un adhésif typique des HMPSA.

La demanderesse, cherchant à résoudre l'ensemble des problèmes décrits précédemment a trouvé que les compositions adhésives à base de copolymères à blocs d'architecture et de structure chimique bien définies tels que ceux décrits plus loin, et de résines tackifiantes et d'huile particulièrement bien adaptés présentent un ensemble des propriétés applicatives relativement intéressant et constituent une bonne solution.

La présente demande décrit donc un copolymère à blocs répondant à la formule générale suivante :

$I\text{-}(B)_n\text{-}(A)_m$ dans laquelle n est un entier supérieur ou égal à 1, m un entier inférieur ou égal à n, B un bloc polymère lié directement au coeur I par une liaison covalente, A un bloc polymère, lié directement au bloc B par une liaison covalente. Ainsi, n blocs B sont rattachés par l'une de leurs extrémités au coeur I et m blocs parmi les n blocs B sont rattachés par leurs autres extrémités à un bloc A.

Le bloc B est obtenu par la polymérisation d'un mélange de monomères ($B_0$) comprenant :

- de 90 à 100% en poids d'au moins un monomère ($B_1$) choisi dans le groupe contenant les acrylates d'alkyles en C1-C12 linéaires ou ramifiés,
- de 0 à 10 % en poids d'au moins un monomère ($B_2$) choisi parmi les acides et leurs dérivés tels que l'acide acrylique, l'acide méthacrylique

et leurs sels,
A est obtenu par la polymérisation d'un mélange de monomères ($A_0$) comprenant :

- de 95 à 100% en poids d'au moins un monomère ($A_1$) choisi dans le groupe contenant les monomères méthacryliques, styrèniques et leurs dérivés,
- de 0 à 5 % en poids d'au moins un monomère ($A_2$) choisi parmi les acides et leurs dérivés tels que l'acide acrylique, l'acide méthacryliques et leurs sels de sodium ou de potassium.

Le coeur (I) est un groupement organique possédant n, supérieur ou éga l à 1, atomes de carbone auxquels sont rattachés les blocs B par l'une des valences de ces atomes de carbone.
I répond à l'une des formules générales **Ia, Ib** et **Ic** suivantes :

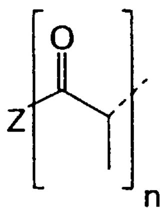
Ia

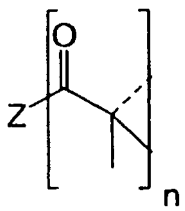
**Ib**

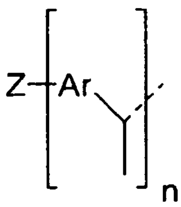
**Ic**

Ia, Ib et Ic sont issues de la décomposition thermique de l'alcoxyamine correspondante comme décrit plus loin (formules II) où Ar désigne un groupement aromatique substitué, Z est un radical organique ou minéral polyfonctionnel de masse molaire supérieure ou égale à 14. Z est associé à n fonctions de type acryl dans la formule **Ia,** à n fonctions type méthacryl dans la formule **Ib** et à n fonctions de type styryl dans **Ic.** A titre d'exemple non limitatifs de la portée de l'invention, Z peut être un groupement polyalcoxy en particulier dialcoxy tels que les radicaux 1,2 éthane-dioxy, 1,3 propane-dioxy, 1,4 butane dioxy, 1,6 hexane dioxy, le 1,3,5 tris(2-éthoxy) acide cyanurique ; un groupement polyaminoamine, telles que les poly éthylènes amines le 1,3,5 tris(2-éthyl amino) acide cyanurique ; un groupement polythioxy ; un groupement phosphonate ou polyphosphonate. Z peut être aussi un groupement minéral par exemple un complexe organométallique tel que : $M^{n+},O^{-}_{n}$, la deuxième valence des atomes d'oxygène correspond à la liaison apparaissant entre Z et les groupements acryl, méthacryl et styryl. M peut être un atome de magnésium, de calcium, d'aluminium, de titane, de zirconium, de chrome, de molybdène, de tungstène, de manganèse, de fer, de cobalt, de nickel, de palladium, de platine, de cuivre, d'argent, d'or, de zinc d'étain.
Selon un mode préférentiel de l'invention $B_0$ comprend de 92 à 98 % en poids de monomères $B_1$ et de 2 à 8 % en poids de monomères $B_2$.
$B_2$ est de préférence l'acide acrylique.
Selon un autre mode de réalisation $A_0$ comprend de 95 à 98 % en poids de monomères $A_1$ et de 2 à 5 % en poids de monomères $A_2$.
$A_2$ est de préférence l'acide méthacrylique.
La présence des monomères acides et/ou sels d'acides est essentielle pour améliorer certaines propriétés en particulier pour améliorer l'adhésion des compositions adhésives de l'invention mais aussi pour augmenter la Tg des blocs comprenant tels monomères et augmenter ainsi la différence des coefficients de solubilité entre les différents

blocs du copolymère à blocs.

L'ensemble des blocs B représente de 50 à 95 % en poids du poids total du copolymère.

Le bloc B est un bloc polymère a caractère élastomère c'est-à-dire présentant une température de transition vitreuse (Tg) inférieure à la température ambiante et de préférence inférieure à - 30°C ; Par ailleurs le bloc B a une masse moyenne en poids comprise entre 2000 et 300 000 g /mol, de préférence comprise entre 10000 et 200000 et un indice de polydispersité compris entre 1 et 3.

Le bloc A est un bloc polymère à caractère thermoplastique c'est-à-dire ayant une Tg supérieure à la température ambiante et de préférence supérieure à 90°C.

La masse moléculaire moyenne en poids (Mw) du copolymère à blocs $(A)_m$-$(B)_n$-I est comprise entre 80000 g/mol et 300000 g/mol.

De tels polymères sont décrit notamment dans le document WO 99/03894. Le copolymère de l'invention peut être préparé selon le procédé de polymérisation radicalaire contrôlée décrit plus loin. Il s'agit d'un procédé connu, cependant, étant donné le caractère élastomère du copolymère il est toujours très difficile voire impossible de le récupérer, en fin de cycle de préparation sous une forme convenable pour une utilisation ultérieure. Pour résoudre ce problème la demanderesse a optimisé le procédé de synthèse en incorporant dans la chaîne de préparation un appareil de type « malaxeur-sécheur » cet appareil bien connu dans les techniques de polymérisation anionique n'a jamais été proposé ou suggéré pour une utilisation dans un procédé tel que celui de la présente invention en raison de certains préjugés. En particulier, le préjugé selon lequel on ne doit pas ou en tout cas on ne peut pas utiliser un « malaxeur-sécheur » pour traiter des produits à fort caractère élastomère et à forte viscosité. Celle-ci étant due à la fois au faible taux de volatils en fin de cycle mais aussi à la composition et à l'architecture du copolymère à blocs selon l'invention.

Le procédé de préparation consiste donc à amorcer la polymérisation du ou des monomères nécessaires pour le bloc B par un amorceur de type alcoxyamine, mélangé éventuellement à un nitroxyde. Le choix des amorceurs de l'invention est primordial pour la réussite de la fabrication du matériau : ces amorceurs permettent en effet de contrôler le nombre de bras du copolymère bloc ainsi que son bon séquençage. Cette dernière caractéristique dépend du choix de l'agent de contrôle nitroxyde produit par la décomposition des alcoxyamines initiatrices. Les formules générales des amorceurs alcoxyamines choisis selon l'invention sont donc les suivantes :

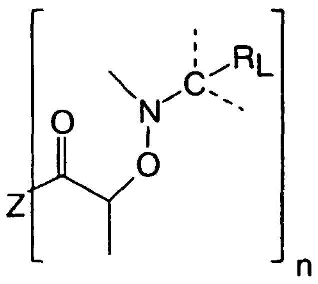
IIa

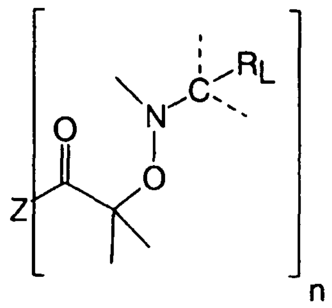
IIb

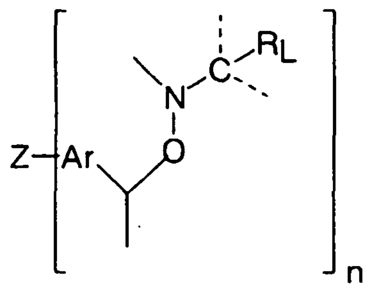
IIc

dans lesquelles :

Z à la même signification que précédemment, l'atome de carbone en position alpha de la liaison NO est porteur d'au moins un groupement organique $R_L$ de masse moléculaire supérieure ou égale à 14 g/mol. Les autres valences de l'azote ou du carbone en position alpha sont porteuses de groupements organiques tels que des groupements alkyles linéaires ou ramifiés tels que le ter butyle ou l'isopropyl, éventuellement substitué tels que le 1,1 diméthyl 2 hydroxy éthyle, des atomes d'hydrogène, des cycles aromatiques tels que le groupement phényl éventuellement substitué.

Le radical $R_L$ présente une masse molaire supérieure à 14 pouvant comprendre un groupement phosphoryle et/ou un cycle aromatique.

De manière générale les alcoxyamines selon l'invention sont celles décrites dans la demande de brevet EP 1178955.

Les alcoxyamines préférées de l'invention sont celles répondant aux formules suivantes :

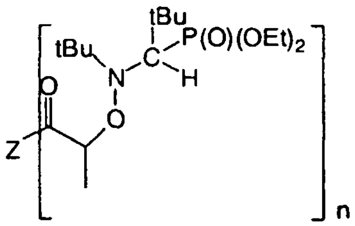

**IIa**

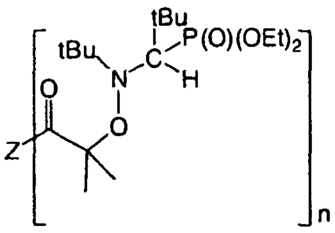

**IIb**

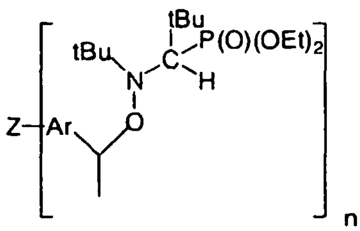

**IIc**

A ces molécules II, sont associés des nitroxydes X correspondant à la formule générale :

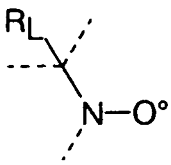

**X**

$R_L$ ainsi que les groupes rattachés à l'atome d'azote et à l'atome de carbone en alpha de l'azote ont la même signification que précédemment.

Le choix de n entier supérieur ou égal à 1 permet en particulier d'assurer un très haut taux de copolymères à blocs dans le matériau final en limitant la présence de bloc B non réagi après la formation de A.

Le choix de $R_L$ est particulièrement important de manière à assurer lors de la formation de B un bon contrôle de la polymérisation qui permet de maintenir une réactivité importante de B lors du réamorçage de A. Par préférence on citera les deux nitroxydes X1 et X2 suivants :

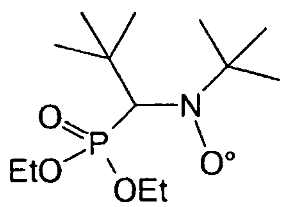

**X1**

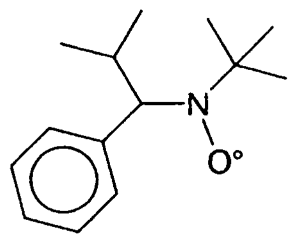

**X2**

X1 est désigné plus loin par SG1.

Le procédé de fabrication consiste donc à polymériser d'abord le bloc B en présence d'un amorceur de formule II, et éventuellement d'une quantité additionnelle de composé **X** à une température comprise entre 60°C et 150°C. de manière préférentielle entre 80 et 120°C, sous une pression allant de 1 à 10 bars, de préférence comprise entre 1.5 et 5 bars. La polymérisation peut être effectuée en présence ou non d'un solvant ou en milieu dispersé. On arrête la polymérisation avant 90% de conversion. On choisit d'évaporer ou non le monomère résiduel du bloc B selon la facilité liée au procédé de synthèse. On ajoute alors la quantité de monomère pour le bloc A. On procède à la polymérisation du bloc A dans des conditions similaires à celles du bloc B. La polymérisation du bloc A est poursuivie à la conversion visée. La récupération du produit se fait après dévolatilisation des monomères et/ou du solvant résiduels dans un outil de récupération de type malaxeur-sécheur à des pressions inférieures à 60 mbars, à des températures produit supérieures à 150°C et à des débits en sortie malaxeur allant de 1 à 15 kg/h. Sous les conditions optimales de température, pression et débit, les polymères secs présentent des taux de volatils résiduels inférieurs à 1000 ppm.

Les copolymères de l'invention tels que décrits précédemment sont utiles dans les formulations adhésives en particulier les formulations adhésives sensibles à la pression.

Un des objets de l'invention est une composition adhésive comprenant :

- de 15 à 50 % en poids du poids total de la composition d'au moins un copolymère à blocs tel que décrit précédemment,
- de 35 à 50 % en poids du poids total de la composition d'au moins une résine tackifiante,
- de 10 à 30 % en poids du poids total de la composition d'au moins un plastifiant.

La composition adhésive selon l'invention peut être obtenue en mélangeant les divers composés ainsi que des additifs éventuels par tout moyen convenable, par exemple par simple mélange à une température comprise entre 150°C et 170°C dans un fondoir.

Selon l'invention les huiles à utiliser sont de préférence des huiles de type trimellitate, comme la tri-octyl trimellitate ou encore des huiles majoritairement naphténique telle que la Catenex N956 de Shell. Il est déconseiller d'utiliser les huiles de type paraffinique (typiquement huile Primol 352, d'Exxon-Mobil), de type polybutène liquide (typiquement Napvis 10) car dans certaines conditions, elles sont incompatibles avec le copolymère et exsudent du mélange binaire.

Selon l'invention les résines tackifiantes à utiliser sont les résines à base de collophanes telles que les Foral AX, d'ester de collophane telles que le Foral F85, les résines connues sous l'appellation pur monomer telles que Krystallex F85, les polyterpène telles que DERCOLYTE A 115 de DRT, les polyesters hydroxylés (typiquement Reagem 5110 de DRT), les terpènes styrène (typiquement DERCOLYTE TS 105 de DRT), les terpènes Pentaerythritol (typiquement DERTOLINE P2L), les résines à base de terpène phénol (typiquement Dertophene T105 de DRT).

La composition de l'invention peut être utilisée comme adhésif sensible à la pression ou non dans les domaines de l'hygiène, du bois, de la reliure, de l'emballage, les rubans et étiquettes ainsi que dans les mastics.

Les exemples suivants illustrent l'invention sans en limiter la portée.

Des exemples de grades de copolymères obtenus par le procédé revendiqué sont présentés dans le tableau suivant :

| | Nature de l'Alcoxyamine | Structure du copolymère | Composition massique du copolymère B/A | Mn du copolymère |
|---|---|---|---|---|
| OB9 | IIb, n=2 | A-B-A<br>B=p(Abu)<br>A=p(S) | 62 / 38 | 158600 |
| 1A26 | IIc, n=3 | A-B-A<br>A<br>B=p(Abu-s-AA)<br>A=p(S) | 73 / 27 | 90700 |
| 1A01 | IIb, n=2 | A-B-A<br>B=p(Abu)<br>A=p(S) | 70 / 30 | 97850 |
| 1A06 | IIb, n=2 | A-B-A<br>B=p(Abu)<br>A=p(S) | 68 / 32 | 99780 |
| 2A13 | IIb, n=2 | A-B-A<br>B=p(Abu)<br>A=p(S-s-AA) | 66 / 44 | 69580 |
| 2A25 | IIb, n=2 | A-B-A<br>B=p(Abu)<br>A=p(S-s-AMA) | 76 / 24 | 56490 |
| 2A08 | IIb, n=2 | A-B-A<br>B=p(Abu-s-AA)<br>A=p(S) | 64 / 36 | 96240 |

(suite)

| | Nature de l'Alcoxyamine | Structure du copolymère | Composition massique du copolymère B/A | Mn du copolymère |
|---|---|---|---|---|
| 2A09 | IIb, n=2 | A-B-A<br>B=p (Abu-s-AA)<br>A=p(S) | 59 / 41 | 55100 |
| P(Abu) poly(Acrylate de butyle),<br>P(S) poly(Styrène)<br>P(Abu-s-AA) poly (Acrylate de butyle-statistique-Acide méthacrylique)<br>P(S-s-AMA) poly (styrène-statistique-Acide Acrylique) | | | | |

Exemples :

**1. Procédé de préparation de l'OB9** : *Synthèse et récupération du copolymère séquencé linéaire Abu/S : la synthèse du bloc thermoplastique est réalisée en masse*

Dans un réacteur de 500L équipé d'une double enveloppe (eau glycolée), 118 kg d'acrylate de butyle sont introduits à 40°C et mis en chauffe. A 80°C, 463 g d'une solution d'alcoxyamine **IIb** à 50% dans l'éthylbenzène et 125 g d'une solution de nitroxyde SG1 répondant à la formule X1, à 10% dans l'éthylbenzène sont introduits. La température est ensuite maintenue à 114°C pendant 4.5 heures jusqu'à atteindre un taux de conversion d'acrylate de butyle de 50%. Le monomère résiduel est alors éliminé à 75°C sous 200-300 mbars. Après dévolatilisation et retour à 60°C, 100 kg de styrène sont introduits dans le réacteur. La température est alors ajustée à 110°C et contrôlée pendant 2 heures jusqu'à polymérisation de 25% des monomères. Une fois la conversion souhaitée atteinte, une solution d'inhibiteur (OH-Tempo) est additionnée au milieu réactionnel à 114°C et le réacteur est ensuite refroidi à 60°C. La solution est alors transférée dans un bac de stockage de 270 L par une pompe à engrenages. L'alimentation du malaxeur-sécheur est effectuée en continu par une pompe à engrenages à partir du bac de stockage à travers des lignes de transfert chauffées à 60°C de manière à éviter tout problème d'encrassement dû à la grande viscosité des solutions polymériques à basse température. Les conditions opératoires optimales d'utilisation du malaxeur-sécheur sont un débit de sortie de 5 à 10 kg/heure, une température de 180°C sous une pression de 10mbars abs. Le polymère sec est alors récupéré sous forme de joncs qui sont refroidis dans un bain froid avant d'être granulés.

**2. Procédé de fabrication du 1 A26** *: Synthèse et récupération du copolymère séquencé étoilé Abu / S : la synthèse du bloc thermoplastique est réalisée en masse.*

Dans un réacteur de 500L équipé d'une double enveloppe (eau glycolée), 153 kg d'acrylate de butyle sont introduits à 40°C et mis en chauffe. A 80°C, 902 g d'une solution de d'alcoxyamine **IIc** à 50% dans l'éthylbenzène et 150 g d'une solution de nitroxyde SG1 à 10% dans l'éthylbenzène sont introduits. La température est ensuite maintenue à 114°C pendant 3.5 heures jusqu'à atteindre un taux de conversion d'acrylate de butyle de 45%. Le monomère résiduel est alors éliminé à 75°C sous 200-300 mbars. Après dévolatilisation et retour à 60°C, 120 kg de styrène sont introduits dans le réacteur. La température est alors ajustée à 110°C et contrôlée pendant 1 heure jusqu'à polymérisation de 25% des monomères. Une fois la conversion souhaitée atteinte, une solution d'inhibiteur (OH-Tempo) est additionnée au milieu réactionnel à 114°C et le réacteur est ensuite refroidi à 60°C. La solution est alors transférée dans un bac de stockage de 270 L par une pompe à engrenages. La récupération du copolymère sous forme sèche (granulés) se fait de manière équivalente à celle décrite dans l'exemple de préparation de l'OB9.

**3 et 4. Procédé de fabrication du 1A01 et 1A06** : *Synthèse et récupération de copolymères séquencés linéaires Abu / S : la synthèse du bloc thermoplastique est réalisée en masse.*

Dans un réacteur de 500L équipé d'une double enveloppe (eau glycolée), 149 kg d'acrylate de butyle sont introduits à 40°C et mis en chauffe. A 80°C, 760 g d'une solution d'alcoxyamine **IIb** à 50% dans l'éthylbenzène et 206 g d'une solution de nitroxyde SG1 à 10% dans l'éthylbenzène sont introduits. La température est ensuite maintenue à 114°C pendant 4.5 heures jusqu'à atteindre un taux de conversion d'acrylate de butyle de 50%. Le monomère résiduel est alors éliminé à 75°C sous 200-300 mbars. Après dévolatilisation et retour à 60°C, 120 kg de styrène sont introduits dans le réacteur. La température est alors ajustée à 110°C et contrôlée pendant 2 heures jusqu'à polymérisation de 25% des monomères. Une fois la conversion souhaitée atteinte, une solution d'inhibiteur (OH-Tempo) est additionnée

au milieu réactionnel à 114°C et le réacteur est ensuite refroidi à 60°C. La solution est alors transférée dans un bac de stockage de 270 L par une pompe à engrenages. La récupération du copolymère sous forme sèche (granulés) se fait de manière équivalente à celle décrite dans l'exemple de préparation de l'OB9.

**5. Procédé de fabrication du 2A13** *: Synthèse et récupération de copolymères séquencés linéaire Abu / S-AA : la synthèse du bloc thermoplastique est réalisée en masse.*

Dans un réacteur de 500L équipé d'une double enveloppe (eau glycolée), 150 kg d'acrylate de butyle sont introduits à 40°C et mis en chauffe. A 80°C, 766 g d'une solution d'alcoxyamine **IIb** à 50% dans l'éthylbenzène et 206 g d'une solution de nitroxyde SG1 à 10% dans l'éthylbenzène sont introduits. La température est ensuite maintenue à 114°C pendant 4.5 heures jusqu'à atteindre un taux de conversion d'acrylate de butyle de 50%. Le monomère résiduel est alors éliminé à 75°C sous 200-300 mbars. Après dévolatilisation et retour à 60°C, 125 kg de styrène et 3 kg d'acide acrylique sont introduits dans le réacteur. La température est alors ajustée à 110°C et contrôlée pendant 1.5 heures jusqu'à polymérisation de 25% des monomères. Une fois la conversion souhaitée atteinte, une solution d'inhibiteur (OH-Tempo) est additionnée au milieu réactionnel à 114°C et le réacteur est ensuite refroidi à 60°C. La solution est alors transférée dans un bac de stockage de 270 L par une pompe à engrenages. La récupération du copolymère sous forme sèche (granulés) se fait de manière équivalente à celle décrite dans l'exemple de préparation de l'OB9.

**6. Procédé de fabrication du 2A25** *: Synthèse et récupération de copolymères séquencés linéaire Abu / S-AMA : la synthèse du bloc thermoplastique est réalisée en solvant.*

Dans un réacteur de 500L équipé d'une double enveloppe (eau glycolée), 189 kg d'acrylate de butyle sont introduits à 40°C et mis en chauffe. A 80°C, 870 g d'une solution d'alcoxyamine **IIb** à 50% dans l'éthylbenzène et 208 g d'une solution de nitroxyde SG1 à 10% dans l'éthylbenzène sont introduits. La température est ensuite maintenue à 114°C pendant 4.5 heures jusqu'à atteindre un taux de conversion d'acrylate de butyle de 45%. Le monomère résiduel est alors éliminé à 75°C sous 200-300 mbars. Après dévolatilisation et retour à 60°C, 47 kg de styrène, 5 kg d'acide méthacrylique et 94 kg d'éthylbenzène sont introduits dans le réacteur. La température est alors ajustée à 120°C et contrôlée pendant 2.0 heures jusqu'à polymérisation de 50% des monomères. Une fois la conversion souhaitée atteinte, une solution d'inhibiteur (OH-Tempo) est additionnée au milieu réactionnel à 114°C et le réacteur est ensuite refroidi à 60°C. La solution est alors transférée dans un bac de stockage de 270 L par une pompe à engrenages. La récupération du copolymère sous forme sèche (joncs) se fait de manière équivalente à celle décrite dans l'exemple de préparation de l'OB9.

**7 et 8. Procédé de fabrication du 2A08 et 2A09** *: Synthèse et récupération de copolymères Abu-AA / S : la synthèse du bloc thermoplastique est réalisée en masse.*

Dans un réacteur de 500L équipé d'une double enveloppe (eau glycolée), 147 kg d'acrylate de butyle et 3 kg d'acide acrylique sont introduits à 40°C et mis en chauffe. A 80°C, 766 g d'une solution d'alcoxyamine **IIb** à 50% dans l'éthylbenzène et 206 g d'une solution de nitroxyde SG1 à 10% dans l'éthylbenzène sont introduits. La température est ensuite maintenue à 114°C pendant 4.5 heures jusqu'à atteindre un taux de conversion d'acrylate de butyle de 50%. Le monomère résiduel est alors éliminé à 75°C sous 200-300 mbars. Après dévolatilisation et retour à 60°C, 128 kg de styrène sont introduits dans le réacteur. La température est alors ajustée à 110°C et contrôlée pendant 2 heures jusqu'à polymérisation de 25% des monomères. Une fois la conversion souhaitée atteinte, une solution d'inhibiteur (OH-Tempo) est additionnée au milieu réactionnel à 114°C et le réacteur est ensuite refroidi à 60°C. La solution est alors transférée dans un bac de stockage de 270 L par une pompe à engrenages. La récupération du copolymère sous forme sèche (granulés) se fait de manière équivalente à celle décrite dans l'exemple de préparation de l'OB9.

## II. Méthodes de tests

Compatibilité Polymère / (Résine ou Huile)

Afin d'évaluer la compatibilité entre l'huile ou la résine et le polymère, nous réalisons par voie fondue à 150°C un mélange binaire entre la résine (ou l'huile) à caractériser et un copolymère de référence S-ABu-S 0B9

Pour les résines solides à température ambiante, le mélange contient à 35% en poids de copolymère.

Pour les résines liquides à température ambiante, le mélange contient à 69% en poids de copolymère.

Pour les huiles, le mélange contient 85% en poids de copolymère.

Ce mélange est ensuite caractérisé par la mesure des propriétés viscoélastiques (G', G", tan d) en fonction de la température à la fréquence de sollicitation de 1 Hz.

Les températures de transition vitreuse (Tg) des phases ABu et Styrène du mélange sont relevées.

En cas de non-compatibilité totale ou partielle de l'huile ou la résine avec le polymère, la température de transition vitreuse de ce composé peut être observée.

En cas de compatibilité de l'huile ou la résine avec le polymère, les températures de transition vitreuse de la phase ABu et de la phase Styrène sont décalées par rapport aux températures de transition vitreuse des phases ABu et Styrène pures. En effet, la Tg correspond à la température pour laquelle on observe l'apparition de mouvement moléculaire : cette température est dépendante de la composition du produit.

On peut estimer la proportion de résine dans chacun des blocs par les relations suivantes :

$$\frac{w_{mou}}{Tg_{mou}} = \frac{w_{res\ mou}}{Tg_{res}} + \frac{w_{ABu}}{Tg_{ABu}} \qquad avec\ w_{mou} = w_{res\ mou} + w_{ABu}$$

$$\frac{w_{dur}}{Tg_{dur}} = \frac{w_{res\ dur}}{Tg_{res}} + \frac{w_{PS}}{Tg_{PS}} \qquad avec\ w_{dur} = w_{res\ dur} + w_{PS}$$

*et*

$$w_{res\ mou} + w_{res\ dur} + w_{PS} + w_{ABu} = 1$$

où :

w res est la fraction en poids totale de résine (ou d'huile) dans le mélange binaire

wPS est la fraction en poids du bloc polystyrène dans le mélange binaire (soit 85% x la fraction en poids de bloc polystyrène dans le polymère sélectionné - 35%)

wABu est la fraction en poids du bloc polyacrylate de butyle dans le mélange binaire (soit 85% x la fraction en poids de bloc polyacrylate de butyle dans le polymère sélectionné - 65%)

w res mou est la fraction en poids de résine incorporée dans la phase de basse Tg (inférieure à 20°C)

w res dur est la fraction en poids de résine incorporée dans la phase de haute Tg (supérieure à 20°C)

Tg res est la température de transition vitreuse de la résine mesurée à la fréquence de sollicitation de 1 Hz

Tg PS est la température de transition vitreuse du bloc polystyrène mesurée à la fréquence de sollicitation de 1 Hz sur le copolymère modèle pur

Tg ABu est la température de transition vitreuse du bloc polyacrylate de butyle mesurée à la fréquence de sollicitation de 1 Hz sur le copolymère modèle pur Tg dur est est la température de transition vitreuse dans la phase de haute Tg (supérieure à 20°C) mesurée à la fréquence de sollicitation de 1 Hz sur le mélange binaire

Tg mou est la température de transition vitreuse dans la phase de basse Tg (inférieure à 20°C) mesurée à la fréquence de sollicitation de 1 Hz sur le mélange binaire.

SAFT/PAFT

Le test SAFT (ou PAFT) mesure la capacité d'un adhésif thermofusible à résister à une force statique de 500 g (ou 100 g) en cisaillement (ou en pelage) sous l'effet d'une montée régulière en température de 0.4°C/min.

Le SAFT est défini par la température à laquelle on peut observer une séparation par glissement vertical parallèle d'une aire de (25 x 25) $mm^2$ enduite de HMPSA d'une plaque d'acier inoxydable plane.

Le HMPSA est enduit entre 140°C et 180°C sur une bande de PET (Polyéthylène téréphtalate) de (25 x 400) $mm^2$ d'épaisseur. L'épaisseur étant constante le grammage est compris entre 22 et 32 $g/m^2$. Les bandes à tester doivent être conditionnées au moins quatre heures avant l'essai dans une pièce climatisée à (23 +/- 2)°C et (50 +/- 5)% d'humidité relative. Le ruban auto-adhésif est appliqué à l'aide d'un rouleau standard normalisé de 2 kg.

Le résultat du SAFT est donné en °C. Le type de rupture doit être mentionné.

Tack à la Boucle

Le test du tack à la boucle (loop tack) est le test FINAT FTM 9 décrit dans le manuel technique FINAT, Laan

Copes Van Cattenbubsh 79, NL 2585 EW LA HAYE (1995) (HMPSA.

Ce test caractérise l'adhésion instantanée ou "tack". Le tack est défini comme étant la force requise pour décoller une boucle de PET enduite de HMPSA dont une surface déterminée a été préalablement mise en contact avec une plaque d'acier inoxydable.

Le HMPSA est enduit entre 140°C et 180°C sur une bande de PET de (25 x 400) $mm^2$ d'épaisseur. L'épaisseur étant constante le grammage est compris entre 22 et 32 $g/m^2$. Les bandes à tester doivent être conditionnées au moins quatre heures avant l'essai dans une pièce climatisée à (23 +/- 2)°C et (50 +/- 5)% d'humidité relative. Le ruban auto-adhésif est appliqué à l'aide d'un rouleau standard normalisé de 2 kg.

Le test est effectué à l'aide d'un dynamomètre à une vitesse de traction de 300 mm/min dans une pièce climatisée à (23 +/- 2)°C et (50 +/- 5)% d'humidité relative.

Le tack à la boucle est quantifié par la valeur de force maximale. Le résultat du test de mesure du tack à la boucle est donné en N/25mm. Le type de rupture doit également être mentionné. Les différents types de rupture sont définis comme suit :

**Rupture adhésive :** Le HMPSA n'adhère pas sur un des deux substrats.

**Rupture cohésive :** on observe une rupture dans le joint de colle. Dans ce cas, les deux subtrasts encollés entraînent une partie du joint lors de la traction.

**Rupture mixte** : la rupture est indécise et on peut observer sur une même éprouvette les deux types de rupture décrits plus haut.

Tenue au fluage

La tenue au fluage est déterminée par le test FTM8 (Manuel FINAT déjà cité). Ce test mesure la capacité d'un HMPSA à résister à une force statique de 1 kgf à une température donnée (à température ambiante dans les exemples donnés.

La résistance au cisaillement statique est définie par le temps nécessaire pour séparer par glissement vertical parallèle une aire de (25 x 25) $mm^2$ enduite de HMPSA d'une plaque d'acier inoxydable plane.

Le HMPSA est enduit entre 140°C et 180°C sur une bande de PET de (25 x 400) $mm^2$ d'épaisseur. L'épaisseur étant constante le grammage est compris entre 22 et 32 $g/m^2$. Les bandes à tester doivent être conditionnées au moins quatre heures avant l'essai dans une pièce climatisée à (23 +/- 2)°C et (50 +/- 5)% d'humidité relative. Le ruban auto-adhésif est appliqué à l'aide d'un rouleau standard normalisé de 2 kg.

Le résultat du test de fluage est donné en minutes. Le type de rupture doit être également mentionné.

Pelage à 180°

L'adhérence sur l'acier est déterminée par le test FTM1 (Manuel Finat déjà cité). Ce test quantifie le pouvoir adhésif. Ce dernier est défini comme étant la force requise pour enlever une bande de PET enduite de HMPSA d'une plaque d'acier inoxydable.

Le HMPSA est enduit entre 140°C et 180°C sur une bande de PET de (25 x 400) $mm^2$ d'épaisseur. L'épaisseur étant constante le grammage est compris entre 22 et 32 $g/m^2$. Les bandes à tester doivent être conditionnées au moins quatre heures avant l'essai dans une pièce climatisée à (23 +/- 2)°C et (50 +/- 5)% d'humidité relative. Le ruban auto-adhésif est appliqué à l'aide d'un rouleau standard normalisé de 2 kg.

La force d'adhésion est mesurée 20 minutes après application et 24 heures après application. Le test est effectué à l'aide d'un appareil de traction, sous un angle de pelage de 180°, à une vitesse de 300 mm/min dans une pièce climatisée à (23 +/- 2)°C et (50 +/- 5)% d'humidité relative.

Le résultat du test de pelage est donné en N/25mm. Le type de rupture doit être mentionné, comme décrit pour le test de tack à la boucle.

Les conditions de synthèse du copolymère sont très importantes pour obtenir une séparation entre les blocs de polystyrène et le bloc central de polyacrylate de butyle : cette structuration du matériau est une des bases essentielles des bonnes performances et de la possibilité de formuler de manière contrôlée le copolymère dans le but de produire un HMPSA.

Le **graphe 1** montre l'évolution de tangente delta, qui est le rapport du module visqueux sur le module élastique comme mesuré en viscoélasticité, avec la température. Les températures de transition vitreuse de chaque bloc correspondent aux maxima des pics de tan d. Il est aisé de voir que le produit dont les conditions de synthèse sont optimisées de la façon décrite précédemment présente une bien meilleure séparation de phase qu'un produit de nature chimique similaire dont les conditions de synthèse ne sont pas optimisées. L'optimisation des conditions de synthèse se traduit par un écart plus important entre les températures de transition vitreuse des deux blocs et un niveau de tan delta plus faible dans l'intervalle de température compris entre ces transitions.

La réalisation de mélange binaire avec différent type d'huile nous a permis de mettre en évidence que de manière à formuler les copolymères pour obtenir des HMPSA, il convient d'utiliser de façon avantageuse des huiles de type de type triméllitate ou majoritairement naphténique.

La réalisation de mélange binaire avec différents types de résines nous a permis de mettre en évidence que de manière à formuler les copolymères pour obtenir les HMPSA, il convient d'utiliser de façon avantageuse des résines à base de collophanes, d'ester de collophane, polyterpène, polyester hydroxylé, terpène styrène, Pentaérythritol ester de résine, résine de terpène phénol.

Sur le **graphe 2**, on représente la mesure DMA du copolymère modèle pur, d'une résine adaptée à la formulation de ce copolymère (par exemple ici Reagem 5110) et d'une résine non adaptée à la formulation de ce polymère (par exemple ici Adtac LV).

Pour l'homme de l'art, il est clair sur cette mesure que l'Adtac LV est faiblement miscible avec le copolymère (apparition d'un pic vers -11 °C) et que la partie miscible de cette résine est plus compatible avec les blocs styrènes (décalage important de la Tg haute température) qu'avec la partie Acrylate de butyle (décalage faible avec la température). Au contraire, la résine Réagem 5110 est parfaitement miscible avec le copolymère (pas d'apparition d'un troisième pic) et est plus miscible avec la partie Acrylate de Butyle (décalage important de la Tg basse) qu'avec les blocs de polystyrène (décalage faible de la Tg haute).

A partir de ce choix de composant, il est possible de formuler des adhésifs HMPSA.

**Exemple 9**

Nous avons réalisé des formulations HMPSA à partir des copolymères dont les propriétés sont données dans le **tableau 1.**

Le copolymère 1 A26 a la particularité d'avoir un bloc central acrylate étoilé.

Les DMA de ces trois copolymères sont présentées dans le graphe 3. Les mélanges sont faits avec de la résine Foral AX et de l'huile TOTM.

Le premier chiffre indique le pourcentage de polymère dans la formulation. Les chiffres entre parenthèses indiquent la proportion de résine et d'huile du complément.

Les mélanges sont faits à environ 180°C avec une agitation mécanique de type turbine.

Le **tableau 2** donne les résultats des tests d'adhésion menés sur ces produits.

Ce type de formulation permet d'obtenir des HMPSA très tackants.

**Exemple 10**

A partir des polymères précédemment décrits dans le tableau 1, nous avons réalisé des mélanges en remplaçant la résine Foral AX, adaptée aux copolymères, par une résine Norsolène W90 non adaptée à la formulation de ces copolymères.

Les résultats des tests d'adhésion sont regroupés dans le **tableau 3.** Les propriétés de ces mélanges sont notoirement insuffisantes : ils ne peuvent pas être considérés comme des HMPSA satisfaisants.

**Exemple 11**

Pour ces formulations, nous avons remplacé la résine Foral AX par la résine Dercolyte A115. Les résultats des tests d'adhésion sont regroupés dans le **tableau 4.**

Ce type de formulation permet d'avoir des adhésifs ayant une force de pelage, un Saft plus élevé au détriment du tack à la boucle. Ces formulations présentent en outre l'avantage d'avoir un très bon pelage instantané.

**Exemple 12**

Nous avons réalisé des formulations dans lesquelles les blocs styrènes du copolymère sont fonctionnalisés en copolymérisant avec le styrène soit de l'acide acrylique, soit de l'acide méthacrylique. Les données sur ces copolymères sont regroupées dans le **tableau 5.**

Nous avons formulé ces polymères en utilisant des huiles soit TOTM soit Catenex N956 et des résines soit Foral AX.

Les résultats des tests d'adhésion sont regroupés dans le **tableau 6.** Ce type de formualtion permet d'obtenir des produits avec des tacks à la boucle élevés tout en ayant des forces de pelage élevées.

**Exemple 13**

Sur les copolymères qui sont décrits dans le tableau 7, nous comparons les formulations HMPSA que l'on peut obtenir en utilisant un plastifiant adapté à la formulation de tels copolymères, tel TOTM ou Catenex N956, ou un plastifiant non adapté à la formulation de ces produits, telle l'huile Primol 352.

Ces résultats montrent bien que s'il est possible d'obtenir de très bons HMPSA avec les copolymères revendiqués dans l'invention, il convient de veiller à sélectionner les composants de la formulation attentivement.

Tableau 1

| Reference | Bloc A | Bloc A % | Bloc B | Mw totale | Mw/Mn |
|---|---|---|---|---|---|
| OB9 | P(Abu) | 62 | P(S) | 329600 | 2.1 |
| 1A01 | P(Abu) | 70 | P(S) | 219800 | 1.98 |
| 1A06 | P(Abu) | 68 | P(S) | 221540 | 2.35 |
| 1A26 | P(Abu) | 73 | P(S) | 283630 | 2.3 |

Tableau 2

| | Adhésif Standard | 1 A26 FORAL AXE 20-(70-30) | 1 A26 FORAL AXE 30-(70-30) | 1A01 FORAL AXE 20-(70-30) | 1A01 FORAL AXE 30-(70-30) | 1A06 FORAL AXE 20-(70-30) | 1A06 FORAL AXE 30-(70-30) | 0B09 FORAL AXE 20-(70-30) | 0B09 FORAL AXE 30-(70-30) |
|---|---|---|---|---|---|---|---|---|---|
| Grammage moyen en g-m² | **30,00** | **25,60** | **24,50** | **24,95** | **25,20** | **24,64** | **24,95** | **25** | **24** |
| | 13,00 | 1,45 | 1,89 | 2,00 | 1,79 | 1,84 | 2,00 | 1,93 | 2 |
| SAFT INOX en °C | **53** | **52** | **57** | **47** | **55** | **46** | **55** | **43** | **59** |
| | 1,8 | 1,8 | 0,0 | 0,6 | 1,2 | 0,0 | 0,0 | 1,9 | 0,6 |
| Fluage INOX en min | **10000** | **88** | **403** | **260** | **298** | **226** | **588** | **162** | **329** |
| Pelage 180° 20 min en N-25 mm | **0,40** | **9,95** | **10,53** | **16,77** | **16,33** | **16,43** | **15,07** | **13,47** | **15,87** |
| | 0,00 | 0,91 | 0,74 | 1,37 | 3,63 | 1,50 | 0,64 | 0,76 | 1,36 |
| type de rupture | stick slip | cohésive | cohésive | mixte cohésive adhésive | adhésive | cohésive | adhésive | cohésive | cohésive |
| Pelage 180° 24h en N-25 mm | **26,85** | **4,77** | **8,60** | **9,35** | **15,90** | **10,40** | **14,40** | **7,55** | **17,70** |
| | 1,25 | 0,15 | 0,85 | 0,92 | 1,84 | 1,56 | 0,42 | 0,07 | 0,28 |
| type de rupture | cohésive | cohésive | cohésive | adhésive | adhésive | adhésive | adhésive | adhésive | adhésive |
| Loop Tack en N-25 mm | **6,42** | **22,81** | **14,40** | **26,25** | **19,70** | **30,30** | **19,88** | **26,67** | **24,60** |
| | 1,25 | 4,89 | 1,91 | 3,68 | 2,82 | 1,04 | 1,35 | 0,06 | 1,74 |
| Viscosité T=0 en mPas à 163°C | **2100** | **525** | **1920** | **375** | **1220** | **475** | **1300** | **820** | **6500** |

Tableau 3

| | HV 252101 UN | 1A26 NORSOLENE W90 20-70-30 | 1A26 NORSOLENE W90 30-70-30 | 1A01 NORSOLENE W90 20-70-30 | 1A01 NORSOLENE W90 30-70-30 | 1A06 NORSOLENE W90 20-70-30 | 1A06 NORSOLENE W90 30-70-30 | OB09 NORSOLENE W90 30-70-30 |
|---|---|---|---|---|---|---|---|---|
| Grammage moyen en g-$m^2$ | **30,00**<br>13,00 | | **25,86**<br>1,45 | **23,91**<br>0,153 | **23,50**<br>1,46 | **24,98**<br>1,58 | **26,10**<br>1,59 | **26**<br>1 |
| SAFT INOX en °C | **53**<br>1,8 | | **50**<br>0,6 | **42**<br>0,6 | **46**<br>1 | **46**<br>0,0 | **50**<br>0,0 | **53**<br>2,3 |
| Fluage INOX en min | **10000** | | **565** | **240** | **1043** | **256** | **929** | **15258** |
| Pelage 180° 20 min en N 25 mm<br>type de rupture | **0,40**<br>0,00<br>stick slip | | **1,50**<br>0,20<br>stick slip | **1,00**<br>0,00<br>stick slip | **0,83**<br>0,06<br>stick slip | **0,27**<br>0,25<br>stick slip | **0,50**<br>0,12<br>stick slip | **0,40**<br>0,10<br>stick slip |
| Pelage 180° 24h en N 25 mm<br>type de rupture | **26,85**<br>1,25<br>cohésive | | **1,10**<br>0,42<br>stick slip | **1,00**<br>0,14<br>stick slip | **0,80**<br>0,00<br>stick slip | **0,50**<br>0,14<br>stick slip | **0,85**<br>0,07<br>stick slip | **0,60**<br>0,28 |
| Loop Tack en N 25 mm | **6,42**<br>1,25 | | **3,23**<br>1,50 | **2,88**<br>0,70 | **3,53**<br>1,08 | **4,20**<br>2,93 | **2,40**<br>1,04 | **2,28**<br>1,02 |
| Viscosité T=0 en mPas à 163°C | **2100** | | **3500** | **1100** | **3000** | **1050** | **2500** | **16250** |

Tableau 4

| | HV 252101 UN | 1A26 DERCOLYTE A115 20-70-30 | 1A26 DERCOLYTE A115 30-70-30 | 1A01 DERCOLYTE A115 20-70-30 | 1A01 DERCOLYTE A115 30-70-30 | 1A06 DERCOLYTE A115 20-70-30 | 1A06 DERCOLYTE A115 30-70-30 |
|---|---|---|---|---|---|---|---|
| Grammage moyen en g-m² | **30,00**<br>13,00 | **25**<br>1,30 | **24,11** | **25,01**<br>2,00 | **24,80**<br>1,80 | **26,71**<br>0,79 | **24,56**<br>1,57 |
| SAFT INOX en °C | **63**<br>1,8 | **55**<br>1,73 | **66**<br>0,50 | **61**<br>0,6 | **69**<br>1,4 | 57<br>1,4 | **68**<br>1,2 |
| Fluage INOX en min | **10000** | **2151** | **10000** | **10000** | **10000** | **2255** | **10000** |
| Pelage 180° 20 min en N-25 mm | **0,40**<br>0,0 | **7,83**<br>3,89 | **0,67**<br>0,25 | **6,13**<br>1,9 | **20,63**<br>6,4 | **0,13**<br>0,06 | **3,20**<br>0,7 |
| type de rupture | stick slip | adhésive / cohésive | stick slip adhésive inox | mixte stick slip cohésive | mixte stick slip cohésive | stick slip | stick slip |
| Pelage 180° 24h en N-25 mm | **26,85**<br>1,25 | **9**<br>1,98 | **3,05**<br>0,21 | **11,20**<br>11,46 | **22,00**<br>12,30 | **0,25**<br>0,07 | **5,00**<br>1,84 |
| type de rupture | cohésive | adhésive / cohésive | stick slip adhésive inox | mixte stick slip cohésive | mixte stick slip cohésive | stick slip | stick slip |
| Loop Tack en N-25 mm | **6,42**<br>1,25 | **3**<br>1,75 | **2,23**<br>1,18 | **5,13**<br>2,00 | **7,13**<br>3,85 | **2,68**<br>0,25 | **4,80**<br>1,37 |
| Viscosité T=0 en mPas à 163°C | **2100** | **1100** | **3100** | **887** | **3200** | **850** | **1500** |

Tableau 5

| Reference | Composition 1er bloc | % de 1er bloc | Composition 2$^{ème}$ bloc | % de 2$^{ème}$ bloc | Mw |
|---|---|---|---|---|---|
| 2A13 | Abu | 66 | S,AA | 34<br>(S/AA 98/2) | 206 530 |
| 2A25 | Abu | 76 | S,AMA | 24<br>(S/AMA 93/7) | 185 580 |

Tableau 6

| | HV 252101 UN | 2A13 FORALAX TOTM 20/(70/30) | 2A13 FORAL AX TOTM 30/(70/30) | 2A13 FORAL AX Catenex N956 20/(70/30) | 2A13 FORAL AX Catenex N956 30/(70/30) | 2A25 FORAL AX TOTM 20/(70/30) | 2A25 FORAL AX TOTM 30/(70/30) | 2A09 FORAL AX Catenex N956 0/(70/30) | 2A25 FORAL AX Catenex N956 30/(70/30) |
|---|---|---|---|---|---|---|---|---|---|
| Grammage moyen en g/m² | 25,15 | 26 | 25,4 | 25,4 | 25,1 | 25,16 | 25,64 | 25,28 | 26,55 |
| écart type | 1,34 | 0,9 | 1,8 | 1,6 | 1,9 | 1,83 | 1,11 | 1,53 | 0,89 |
| SAFT INOX en °C | 63 | 38 | 48 | 42 | 51 | 31 | 33 | 43 | 51 |
| écart type | 1,8 | 1,3 | 0,6 | 0,0 | 0,6 | 1,00 | 0,50 | 1,15 | 0,58 |
| Fluage INOX en min | 10000 | 14 | 152 | 214 | 833 | 4 | 15 | 91 | 943 |
| Pelage 180° 20 min sur INOX en N/25 mm | 0,40 | 13,80 | 18,87 | 18,17 | 15,35 | 15,87 | 18,67 | 16,80 | 21,40 |
| écart type | 0,00 | 0,95 | 2,59 | 0,32 | 4,31 | 1,31 | 1,70 | 1,81 | 1,56 |
| type rupture | stick slip | cohésive | cohésive | cohésive | stick slip cohésive | cohésive | Cohésive | cohésive un peu stick slip | cohésive stick slip |
| Pelage 180° 24h sur INOX en N/25 mm | 26,85 | 4,00 | 14,65 | 18,70 | 14,50 | 14,65 | 19,5 | 17,9 | 24,6 |
| écart type | 1,25 | 0,14 | 6,15 | 0,14 | 0,00 | 0,35 | 1,41 | 2,26 | 0,28 |
| type rupture | cohésive | adhésive inox | cohésive adhésive inox | cohésive | cohésive | cohésive | adhésive stick slip | cohésive un peu stick slip | cohésive |
| Loop Tack en N/25 mm | 6,42 | 24,73 | 23,93 | 34,10 | 13,58 | 31,23 | 30,88 | 29,90 | 17,38 |
| écart type | 1,25 | 7,57 | 6,00 | 7,92 | 3,86 | 4,04 | 3,74 | 12,29 | 6,55 |
| Viscosité à 163°C T=0 s en mPas | 2100 | 400 | 750 | 623 | 874 | 1000 | 1000 | 698 | 1105 |

Tableau 7

| Reference | Composition 1er bloc | % de 1er bloc | Composition 2$^{ème}$ bloc | % de 2$^{ème}$ bloc | Mw |
|---|---|---|---|---|---|
| 1A01 | Abu | 70 | S | 30 | 219 800 |
| 2A08 | Abu,AA | 64 (Abu/AA 99/1) | S | 36 | 247210 |
| 2A09 | Abu,AA | 59 (Abu/AA 99/1) | S | 41 | 216390 |

Tableau 8

| | 1A01 FORAL AXE Catenex N956 20/(70/30) | 1A01 FORAL AX Catenex N956 30/(70/30) | 1A01 FORAL AX Primol 352 20/(70/30) | 1A01 FORAL AX Primol 352 30/(70/30) | 2A08 FORAL AX Catenex N956 20/(70/30) | 2A08 FORAL AX Catenex N956 30/(70/30) | 2A08 FORAL AX Primol 352 20/(70/30) | 2A08 FORAL AX Primol 352 30/(70/30) | 2A09 FORAL AX Catenex N956 20/(70/30) | 2A09 FORAL AX Catenex N956 30/(70/30) | 2A09 FORAL AX Primol 352 20/(70/30) | 2A09 FORAL AX Primol 352 30/(70/30) |
|---|---|---|---|---|---|---|---|---|---|---|---|---|
| Grammage moyen en g/m² | 23,99 | 24,2 | 24,18 | 24,2 | 26,44 | 25,45 | 25,33 | 25,54 | 23,9 | 24,57 | 25,22 | 26,23 |
| écart type | 1,41 | 1,15 | 1,35 | 1,15 | 1,12 | 1,09 | 1,55 | 1,91 | 1,78 | 1,12 | 1,97 | 1,13 |
| SAFT INOX en °C | 48 | 52 | 26 | 36 | 52 | 49 | 25 | 27 | 54 | 50 | 34 | 25 |
| écart type | 1,0 | 0,5 | 0,5 | 1,0 | 0,5 | 1,7 | 0,0 | 1,5 | 1,00 | 0,58 | 0,82 | 1,91 |
| Fluage INOX en min | 613 | 1052 | 6 | 30 | 1740 | 672 | 11 | 17 | 892 | 884 | 39 | 84 |
| Pelage 180° 20 min sur INOX en N/25 mm | 10,57 | 21,40 | 7,23 | 0,80 | 15,10 | 14,43 | 1,93 | 2,37 | 13,27 | 1,73* | 8,20 | 2,43 |
| écart type | 6,93 | 2,33 | 3,33 | 0,69 | 2,95 | 0,67 | 1,96 | 1,19 | 0,15 | 0,15 | 2,05 | 0,85 |
| type rupture | cohésive / stick slip | cohésive | cohésive | adhésive inox | cohésive stick slip | mixte adhésive inox stick slip | adhésive inox | adhésive inox | cohésive stick slip | stick slip | cohésive | adhésive inox |
| Pelage 180° 24h sur INOX en N/25 mm | 17,10 | 14,45 | 4,95 | 2,10 | 17,50 | 10,05 | 1,45 | 0,20 | 17,55 | 3,95 | 5,1 | 1,2 |
| écart type | 1,41 | 5,73 | 6,15 | 2,26 | 0,85 | 4,60 | 1,63 | 0,14 | 0,64 | 1,20 | 0,42 | 0,28 |
| type rupture | adhésive inox | cohésive/ stick slip | adhésive inox | adhésive inox | cohésive | adhésive inox stck slip | cohésive adhésive inox | cohésive | cohésive | stick slip | cohésive | cohésive |
| Loop Tack en N/25 mm | 28,93 | 32,38 | 20,62 | 15,57 | 38,53 | 20,85 | 15,03 | 15,80 | 33,50 | 10,95 | 19,28 | 19,40 |
| écart type | 6,51 | 3,28 | 2,21 | 0,59 | 1,76 | 8,06 | 1,70 | 4,45 | 1,49 | 3,66 | 2,96 | 6,23 |
| Viscosité à 163°C T=0 s en mPas | 525 | 1150 | 7000 | 8150 | 3500 | 2350 | 2560 | 4500 | 613 | 2480 | 1760 | 8560 |

## Revendications

**1.** Procédé de préparation de copolymères à blocs répondant à la formule suivante:

$I-(B)_{n-}(A)m$ dans laquelle :

- n est un entier supérieur ou égal à 1,
- m est un entier inférieur ou égal à n,
- B est un bloc polymère lié directement au coeur I par une liaison covalente, obtenu par la polymérisation d'un mélange de monomères (Bo) comprenant:
  - de 90 à 100% en poids d'au moins un monomère ($B_1$) choisi dans le groupe contenant les acrylates d'alkyles en C1-C12 linéaires ou ramifiés,
  - de 0 à 14 % en poids d'au moins un monomère ($B_2$) choisi parmi les acides et leurs dérivés tels que l'acide acrylique, l'acide méthacrylique et leurs sels,
- A est un bloc polymère, lié directement au bloc B par une liaison covalente, obtenu par la polymérisation d'un mélangé de monomères ($A_0$) comprenant:
  - de 95 à 100% en poids d'au moins un monomère ($A_1$) choisi dans le groupe contenant les monomères méthacryliques, styrèniques et leurs dérivés,
  - de 0 à 5 % en poids d'au moins un monomère ($A_2$) choisi parmi les acides et leurs dérivés tels que l'acide acrylique, l'acide méthacrylique et leurs sels de sodium ou de potassium,
- le coeur (I) étant un groupement organique répondant à l'une des formules suivantes:

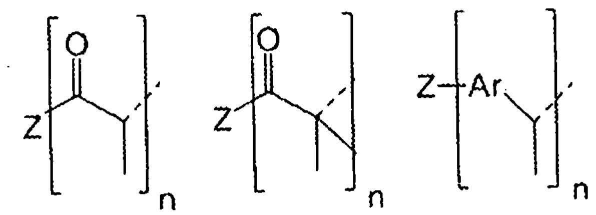

Ia Ib Ic

dans lesquelles Ar désigne un groupement aromatique substitué, Z est un radical organique ou minéral polyfonctionnel de masse molaire supérieure ou égale à 14,

lesdits copolymères à blocs étant préparés par polymérisation radicalaire contrôlée selon le schéma suivant:

- la polymérisation à une température comprise entre 60 et 150 C du mélange Bo en présence d'une alkoxyamine et d'un agent de contrôle de la polymérisation jusqu'à un taux de conversion de 90%,
- l'élimination d'une partie ou de la totalité des monomères Bo n'ayant pas réagi,
- l'ajout et la polymérisation du mélange Ao,
- l'élimination de la totalité des monomères n'ayant pas réagi et récupération du copolymère formé,

**caractérisé en ce que** la récupération est opérée par l'intermédiaire d'un malaxeur-sécheur à une pression inférieure à 60 mbars, une température produit supérieure à 150 C et à un débit en sortie malaxeur allant de 1 à 15 kg/h.

**2.** Procédé selon la revendication 1 dans lequel l'alkoxyamine est choisie parmi les composés répondant à l'une des formules suivantes:

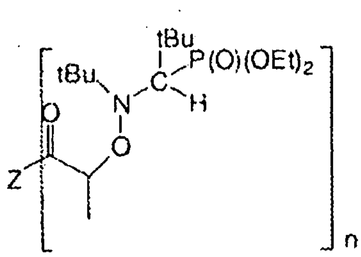

IIa

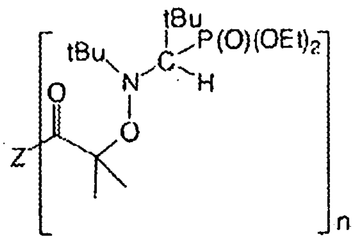

IIb

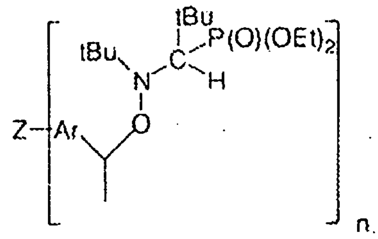

IIc

dans lesquelles Z est un radical organique ou minéral polyfonctionnel de masse molaire supérieure ou égale à 14.

3. Procédé selon l'une des revendications 1 et 2 dans lequel ledit radical organique polyfonctionnel est choisi parmi les radicaux 1,2 éthane-dioxy, 1,3 propane-dioxy, 1,4 butane dioxy, 1,6 hexane dioxy, le 1,35 tris(2(-éthoxy) acide cianurique, polyaminoamines, telles que les poly éthylènes amines, le 1,3,5 tris(2-éthyl amino) acide cyanurique, polythioxy, phosphonate ou polyphosphonate.

4. Procédé selon l'une des revendications 1 et 2 dans lequel ledit radical minéral polyfonctionnel est choisi parmi les complexes de formules $Mn^+O_n$ dans laquelle M est un atome de magnésium, de calcium, d'aluminium, de titane, de zirconium, de chrome, de molybdène, de tungstène, de manganèse, de fer, de cobalt, de nickel, de palladium, de platine, de cuivre, d'argent, d'or, de zinc ou d'étain.

5. Procédé selon l'une des revendications 1 à 4 dans lequel l'agent de contrôle est choisi parmi les composés répondant à l'une des formules suivantes:

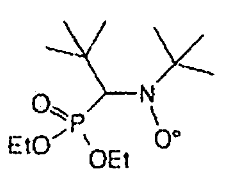

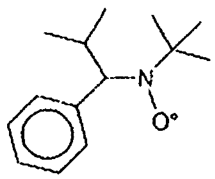

6. Procédé selon l'une des revendications précédentes dans lequel $B_0$ comprend:

- de 92 à 98 % en poids de monomères $B_1$, et,
- de 2 à 8 % en poids de monomères $B_2$.

7. Procédé selon l'une des revendications précédentes dans lequel $B_2$ est l'acide acrylique.

8. Procédé selon l'une des revendications précédentes dans lequel Ao comprend :

- de 95 à 98 % en poids de monomères $A_1$ et,
- de 2 à 5 % en poids de monomères $A_2$.

9. Procédé selon l'une des revendications précédentes dans lequel $A_2$ est l'acide méthacrylique.

10. Procédé selon l'une des revendications précédentes dans lequel le bloc B représente de 50 à 95 % en poids du poids total dudit copolymère.

11. Procédé selon l'une des revendications précédentes dans lequel le bloc B a une Tg inférieure à 0°C et de préférence inférieure à -30C.

12. Procédé selon l'une des revendications précédentes dans lequel le bloc B a une masse moyenne en poids comprise

entre 2000 et 300000 g /mol, de préférence comprise entre 10000 et 200000 et un indice de polydispersité compris entre 1 et 3.

**13.** Procédé selon l'une des revendications précédentes dans lequel le bloc A a une Tg supérieure à la température ambiante et de préférence supérieure à 90°C.

**14.** Composition adhésive comprenant:

- de 15 à 50 % en poids du poids total de la composition d'au moins un copolymère à blocs obtenu par le procédé selon l'une des revendications 1 à 13,
- de 35 à 50 % en poids du poids total de la composition d'au moins une 5 résine tackifiante,
- de 10 à 30 % en poids du poids total de la composition d'au moins un plastifiant.

**15.** Composition selon la revendication 14 dans laquelle le plastifiant est choisi parmi les huiles de type trimellitate, comme la tri-octyl trimellitate ou les huiles majoraitairement naphténique.

**16.** Composition selon la revendication 14 **caractérisée en ce que** la résine tackifiante est choisie dans le groupe comprenant les résines à base de collophanes, d'ester de collophane, de polyterpène, de polyester hydroxylé, de terpène styrène, de terpène Pentaerythritol, ou de terpène phénol.

**17.** Utilisation de la composition selon l'une des revendications 14 à 16 pour la fabrication de bandes, d'étiquettes ou de rubans adhésifs.

**18.** Bandes, étiquettes et rubans adhésifs comprenant une composition adhésive selon l'une des revendications 14 à 16.

**Claims**

**1.** Process for the preparation of block copolymers corresponding to the following formula:
$I\text{-}(B)_n\text{-}(A)_m$, in which

- n is an integer greater than or equal to 1,
- m is an integer less than or equal to n,
- B is a polymer block directly bonded to the core I via a covalent bond, obtained by the polymerization of a mixture of monomers ($B_0$) comprising:

  o from 90 to 100% by weight of at least one monomer ($B_1$) chosen from the group consisting of linear or branched $C_1$-$C_{12}$ alkyl acrylates,
  o from 0 to 10% by weight of at least one monomer ($B_2$) chosen from acids and their derivatives, such as acrylic acid, methacrylic acid and their salts,

- A is a polymer block directly bonded to the B block via a covalent bond, obtained by the polymerization of a mixture of monomers ($A_0$) comprising:

  o from 95 to 100% by weight of at least one monomer ($A_1$) chosen from the group consisting of methacrylic monomers, styrene monomers and their derivatives,
  o from 0 to 5% by weight of at least one monomer ($A_2$) chosen from acids and their derivatives, such as acrylic acid, methacrylic acid and their sodium or potassium salts,

- the core I being an organic group corresponding to one of the following formulae:

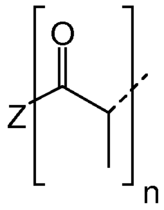

Ia

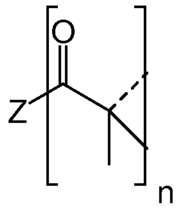

Ib

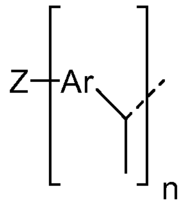

Ic

in which Ar denotes a substituted aromatic group and Z is a polyfunctional organic or inorganic radical with a molar mass of greater than or equal to 14, said block copolymers being prepared by controlled radical polymerization according to the following scheme:

- the polymerization at a temperature of between 60 and 150°C of the mixture $B_0$, in the presence of an alkoxyamine and of an agent for controlling the polymerization, up to a degree of conversion of 90%,
- the removal of a portion or of all of the unreacted monomers $B_0$,
- the addition and the polymerization of the mixture $A_0$,
- the removal of all of the unreacted monomers and recovery of the copolymer formed,

**characterized in that** the recovery is carried out via a mixer-dryer at a pressure of less than 60 mbar, at a product temperature of greater than 150°C and at a mixer outlet flow rate ranging from 1 to 15 kg/h.

**2.** Process according to Claim 1, wherein the alkoxyamine is chosen from the compounds corresponding to one of the following formulae:

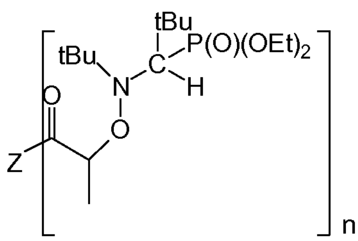

IIa

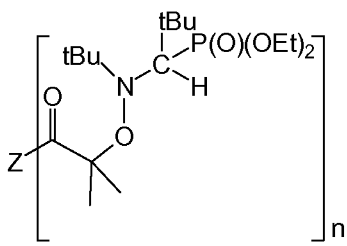

IIb

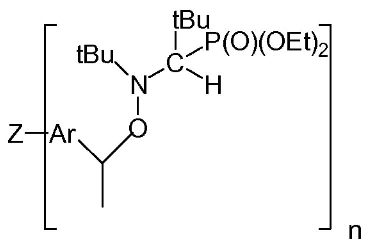

IIc

in which Z is a polyfunctional organic or inorganic radical with a molar mass of greater than or equal to 14.

**3.** Process according to Claim 1 or to claim 2, wherein said polyfunctional organic radical is chosen from the following radicals: 1,2-ethanedioxy, 1,3-propanedioxy, 1,4-butanedioxy, 1,6-hexanedioxy, 1,3,5-tris(2-ethoxy)cyanuric acid, polyaminoamines, such as polyethyleneamines, 1,3,5-tris(2-ethylamino)cyanuric acid, polythioxy, phosphonate or polyphosphonate.

**4.** Process according to Claim 1 or to Claim 2, wherein said polyfunctional inorganic radical is chosen from the complexes of formula $M^{n+}O^{-}_{n}$, in which M is a magnesium, calcium, aluminium, titanium, zirconium, chromium, molybdenum, tungsten, manganese, iron, cobalt, nickel, palladium, platinum, copper, silver, gold, zinc or tin atom.

**5.** Process according to any one of Claims 1 to 4, wherein the control agent is chosen from the compounds corresponding to one of the following formulae:

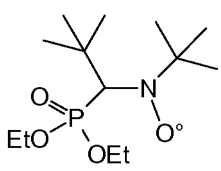 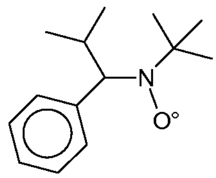

**6.** Process according to any one of Claims 1 to 5, wherein $B_0$ comprises:

- from 92 to 98% by weight of monomers $B_1$ and
- from 2 to 8% by weight of monomers $B_2$.

**7.** Process according to any one of Claims 1 to 6, wherein $B_2$ is acrylic acid.

**8.** Process according to any one of Claims 1 to 7, wherein $A_0$ comprises:

- from 95 to 98% by weight of monomers $A_1$ and
- from 2 to 5% by weight of monomers $A_2$.

**9.** Process according to any one of Claims 1 to 8, wherein $A_2$ is methacrylic acid.

**10.** Process according to any one of Claims 1 to 9, wherein the B block represents from 50 to 95% by weight of the total weight of the said copolymer.

**11.** Process according to any one of Claims 1 to 10, wherein the B block has a Tg of less than 0°C and preferably of less than -30°C.

**12.** Process according to any one of Claims 1 to 11, wherein the B block has a weight-average mass of between 2000 and 300 000 g /mol, preferably of between 10 000 and 200 000, and a polydispersity index of between 1 and 3.

**13.** Process according to any one of Claims 1 to 12, wherein the A block has a Tg of greater than ambient temperature and preferably of greater than 90°C.

**14.** Adhesive composition comprising:

- from 15 to 50% by weight of the total weight of the composition of at least one block copolymer obtained by the process according to any one of Claims 1 to 13,
- from 35 to 50% by weight of the total weight of the composition of at least one tackifying resin,
- from 10 to 30% by weight of the total weight of the composition of at least one plasticizer.

**15.** Composition according to Claim 14, wherein the plasticizer is chosen from oils of trimellitate type, such as trioctyl trimellitate, or predominantly naphthenic oils, such as Catenex N956 from Shell.

**16.** Composition according to Claim 14, wherein the tackifying resin is chosen from the group consisting of resins based on rosins, on rosin ester, on polyterpene, on hydroxylated polyester, on terpene styrene, on pentaerythritol terpene or on terpene phenol (typically).

**17.** Use of the composition according to any one of Claims 14 to 16 in the manufacture of adhesive tapes or labels.

**18.** Adhesive tapes and labels comprising an adhesive composition according to any one of Claims 14 to 16.

**Patentansprüche**

**1.** Verfahren zur Herstellung von Blockcopolymeren der folgenden Formel:
$I- (B)_n- (A)_m$, worin:

- n für eine ganze Zahl größer gleich 1 steht,
- m für eine ganze Zahl größer gleich n steht,
- B für einen über eine kovalente Bindung direkt an den Kern I gebundenen, durch Polymerisation einer Mischung von Monomeren ($B_0$), enthaltend:

  - 90 bis 100 Gew.-% mindestens eines Monomers ($B_1$), ausgewählt aus der Gruppe bestehend aus linearen oder verzweigten $C_1$-$C_{12}$-Alkylacrylaten,
  - 0 bis 10 Gew.-% mindestens eines Monomers ($B_2$), ausgewählt unter Säuren und deren Derivaten wie Acrylsäure, Methacrylsäure und deren Salzen,

  erhaltenen Polymerblock steht;
- A für einen über eine kovalente Bindung direkt an den Block B gebundenen, durch Polymerisation einer Mischung von Monomeren ($A_0$), enthaltend:

  - 95 bis 100 Gew.-% mindestens eines Monomers ($A_1$), ausgewählt aus der Gruppe enthaltend Methacrylmonomere, Styrolmonomere und deren Derivate,
  - 0 bis 5 Gew.-% mindestens eines Monomers ($A_2$), ausgewählt unter Säuren und deren Derivaten wie Acrylsäure, Methacrylsäure und deren Natrium- oder Kaliumsalzen,
  erhaltenen Polymerblock steht;

- der Kern (I) für eine organische Gruppe einer der folgenden Formeln steht:

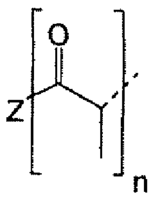
Ia

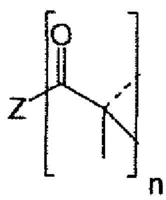
Ib

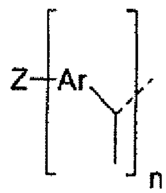
Ic

- wobei Ar eine substituierte aromatische Gruppe bedeutet und Z einen organischen oder anorganischen polyfunktionellen Rest mit einer Molmasse größer gleich 14 bedeutet,
wobei die Blockcopolymere durch geregelte radikalische Polymerisation gemäß dem folgenden Schema erhalten werden:
- Polymerisation der Mischung $B_0$ bei einer Temperatur zwischen 60 und 150°C in Gegenwart eines Alkoxyamins und eines Polymerisationsreglers bis zu einem Umsatz von 90%,
- teilweise oder vollständige Entfernung der nicht umgesetzten Monomere $B_0$,
- Zugabe und Polymerisation der Mischung $A_0$,
- vollständige Entfernung der nicht umgesetzten Monomere und Gewinnung des gebildeten Copolymers,

**dadurch gekennzeichnet, daß** die Gewinnung über einen Mischer-Trockner bei einem Druck unter 60 mbar, einer Produkttemperatur von mehr als 150°C und einem Durchsatz am Mischerausgang von 1 bis 15 kg/h betrieben wird.

**2.** Verfahren nach Anspruch 1, bei dem man das Alkoxyamin unter Verbindungen einer der folgenden Formeln auswählt:

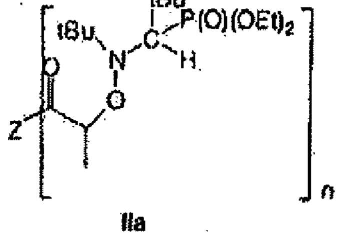
IIa

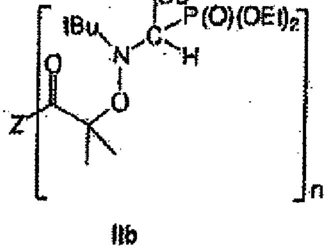
IIb

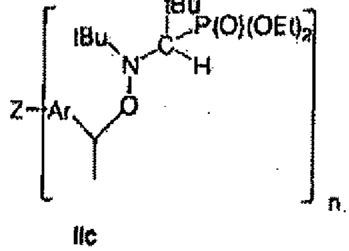
IIc

worin Z für einen organischen oder anorganischen polyfunktionellen Rest mit einer Molmasse größer gleich 14 steht.

**3.** Verfahren nach einem der Ansprüche 1 und 2, bei dem man den polyfunktionellen organischen Rest unter 1,2-Ethandioxy-, 1,3-Propandioxy-, 1,4-Butandioxy-, 1,6-Hexandioxy-, 1,3,5-Tris(2-ethoxy)cyanursäure-, Polyaminoamin-, wie Polyethylenamin-, 1,3,5-Tris(2-ethylamino)cyanursäure-, Polythioxy-, Phosphonat- oder Polyphosphonatresten auswählt.

**4.** Verfahren nach einem der Ansprüche 1 und 2, bei dem man den polyfunktionellen anorganischen Rest unter Komplexen der Formel $M^{n+}O^{-}_{n}$, worin M für ein Magnesium-, Calcium-, Aluminium-, Titan-, Zirconium-, Chrom-, Molybdän-, Wolfram-, Mangan-, Eisen-, Cobalt-, Nickel-, Palladium-, Platin-, Kupfer-, Silber-, Gold-, Zink- oder Zinnatom steht, auswählt.

**5.** Verfahren nach einem der Ansprüche 1 bis 4, bei dem man den Regler unter Verbindungen einer der folgenden Formeln auswählt:

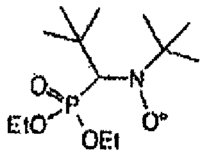

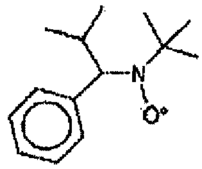

**6.** Verfahren nach einem der vorhergehenden Ansprüche, bei dem $B_0$

- 92 bis 98 Gew.-% Monomere $B_1$ und
- 2 bis 8 Gew.-% Monomere $B_2$

enthält.

**7.** Verfahren nach einem der vorhergehenden Ansprüche, bei dem es sich bei $B_2$ um Acrylsäure handelt.

**8.** Verfahren nach einem der vorhergehenden Ansprüche, bei dem $A_0$

- 95 bis 98 Gew.-% Monomere $A_1$ und
- 2 bis 5 Gew.-% Monomere $A_2$

enthält.

**9.** Verfahren nach einem der vorhergehenden Ansprüche, bei dem es sich bei $A_2$ um Methacrylsäure handelt.

**10.** Verfahren nach einem der vorhergehenden Ansprüche, bei dem der Block B 50 bis 95 Gew.-% des Gesamtgewichts des Copolymers ausmacht.

**11.** Verfahren nach einem der vorhergehenden Ansprüche, bei dem der Block B eine Tg von weniger als 0°C und vorzugsweise weniger als -30°C aufweist.

**12.** Verfahren nach einem der vorhergehenden Ansprüche, bei dem der Block B eine mittlere Molmasse zwischen 2000 und 300000 g/mol und vorzugsweise zwischen 10000 und 200000 und einen Polymolekularitätsindex zwischen 1 und 3 aufweist.

**13.** Verfahren nach einem der vorhergehenden Ansprüche, bei dem der Block A eine Tg von mehr als Umgebungstemperatur und vorzugsweise mehr als 90°C aufweist.

**14.** Klebstoffzusammensetzung, enthaltend:

- 15 bis 50 Gew.-%, bezogen auf das Gesamtgewicht der Zusammensetzung, mindestens eines nach dem Verfahren nach einem der Ansprüche 1 bis 13 erhaltenen Blockcopolymers,

- 35 bis 50 Gew.-%, bezogen auf das Gesamtgewicht der Zusammensetzung, mindestens eines klebrigmachenden Harzes,
- 10 bis 30 Gew.-%, bezogen auf das Gesamtgewicht der Zusammensetzung, mindestens eines Weichmachers.

**15.** Zusammensetzung nach Anspruch 14, bei der der Weichmacher unter Ölen vom Trimellitat-Typ, wie Trioctyltrimellitat, oder überwiegend naphthenischen Ölen ausgewählt ist.

**16.** Zusammensetzung nach Anspruch 14, **dadurch gekennzeichnet, daß** das klebrigmachende Harz aus der Gruppe enthaltend Harze auf Basis von Kolophoniumharzen, Kolophoniumestern, Polyterpen, Hydroxypolyester, Terpen-Styrol, Terpen-Pentaerythrit oder Terpen-Phenol (typischerweise) ausgewählt ist.

**17.** Verwendung der Zusammensetzung nach einem der Ansprüche 14 bis 16 zur Herstellung von Bändern, Etiketten oder Klebebändern.

**18.** Bänder, Etiketten oder Klebebänder, die eine Klebstoffzusammensetzung nach einem der Ansprüche 14 bis 16 enthalten.

[FIG.] 1 : mesure de tan d par DMA à 1 Hz entre un copolymère à séparation de phase marquée (□ rectangle) et un copolymère dont les phases ne sont pas bien séparées (Δ triangle).

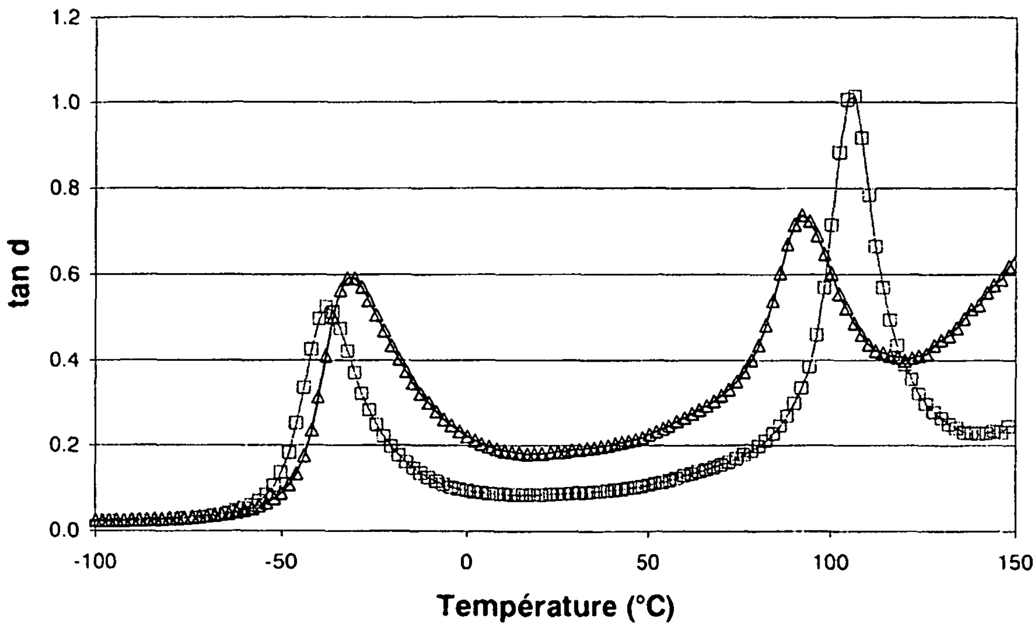

[FIG.] 2 : x bleu SABuS modèle pur, * noir SABuS +Reagem 5110, o rouge Adtac LV.

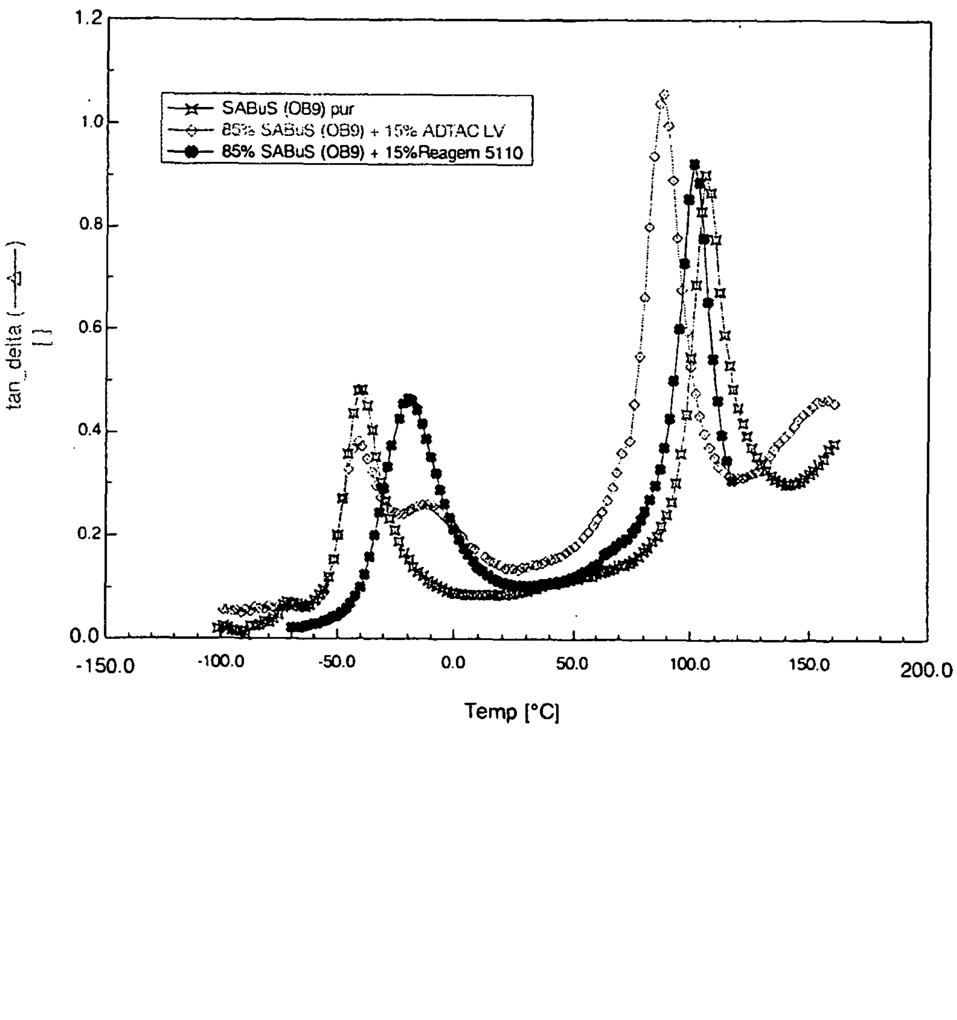

[FIG] **3** : DMA des copolymères de l'exemple 1

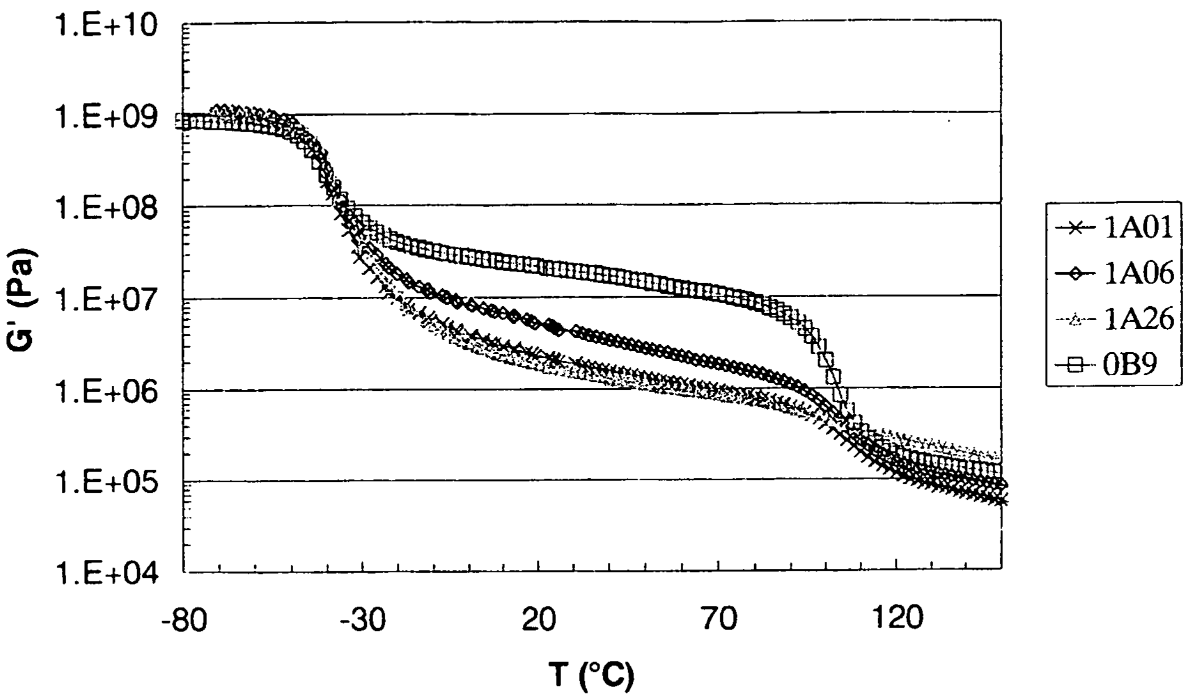

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5313041 A
- EP 0349270 B1
- JP 2001288442 B
- WO 9903894 A
- EP 1178955 A


### Littérature non-brevet citée dans la description


- Ullmann's encyclopedia of industrial chemistry. 1995, vol. A 26, 659-660